# EUROPÄISCHE PATENTSCHRIFT

(11) **EP 2 317 629 B1**
(45) Veröffentlichungstag und Bekanntmachung des Hinweises auf die Patenterteilung: **10.10.2018**
(21) Anmeldenummer: 10008659.4
(22) Anmeldetag: 19.08.2010
(51) Int. Cl.: H02K 7/116, F16H 19/00, E05B 77/26, E05B 77/28, E05B 81/16, E05B 15/04, B60H 1/00, E05B 61/00, E05B 81/06, E05B 81/34, B60N 2/80

(54) **Stellantrieb einer Komponente eines Kraftfahrzeugs**
Actuator for a component of a motor vehicle
Actionneure d'un composant de véhicule automobile

(30) Priorität: 03.11.2009 DE 202009014847 U
(43) Veröffentlichungstag der Anmeldung: 04.05.2011
(73) Patentinhaber: Brose Schliesssysteme GmbH & Co. KG, 42369 Wuppertal (DE)
(72) Erfinder: Zillert, Markus, 40627 Düsseldorf (DE); Rosales, David, 42281 Wuppertal (DE); Joschko, Roman, 41539 Dormagen (DE)
(74) Vertreter: Gottschald, Jan

(56) Entgegenhaltungen:
- EP-A1- 1 323 884
- DE-A1- 10 043 574
- DE-B4- 10 258 645
- GB-A- 2 452 373

## Beschreibung

Die Erfindung betrifft einen Stellantrieb einer Komponente eines Kraftfahrzeugs mit einem motorisch verstellbaren Stellelement, wobei das Stellelement in eine erste Funktionsstellung bringbar ist, wobei ein motorisch verstellbares Blockierelement vorgesehen ist, das in einer ersten Blockierstellung blockierend in Eingriff mit dem Stellelement bringbar ist derart, dass das Stellelement in einer ersten Bewegungsrichtung im Blockbetrieb in die erste Funktionsstellung bringbar ist, wobei das Stellelement in eine dritte Funktionsstellung bringbar ist, dass das Blockierelement blockierend in Eingriff mit dem Stellelement bringbar ist derart, dass das Stellelement in einer zweiten Bewegungsrichtung im Blockbetrieb in die dritte Funktionsstellung bringbar ist, sowie ein Kraftfahrzeugschloss einer Tür oder dergleichen eines Kraftfahrzeugs, das in unterschiedliche Funktionszustände wie "Entriegelt", "Verriegelt" und "Diebstahlgesichert" bringbar ist.

Der in Rede stehende Stellantrieb kann zahlreichen Komponenten eines Kraftfahrzeugs zugeordnet sein. Die hier im Vordergrund stehende Komponente ist allerdings das Kraftfahrzeugschloss einer Tür oder dergleichen eines Kraftfahrzeugs, was nicht beschränkend zu verstehen ist. Andere Anwendungsbereiche für den Stellantrieb sind verstellbare Kopfstützen, Belüftungseinrichtungen oder dergleichen.

Aus der DE 100 43 574 A1 ist ein Stellantrieb für einen Schwenknocken eines Kraftfahrzeugschlosses bekannt.

Stellantriebe bei Kraftfahrzeugschlössern werden regelmäßig eingesetzt, um das Kraftfahrzeugschloss motorisch in unterschiedliche Funktionszustände zu bringen, wie beispielsweise in der GB 2 452 373 A beschrieben. Für die Realisierung unterschiedlicher Funktionszustände ist das Kraftfahrzeugschloss mit einer Schlossmechanik ausgestattet. Relevant sind regelmäßig die Funktionszustände "Entriegelt", "Verriegelt", "Diebstahlgesichert" und "Kindergesichert". Im Funktionszustand "Entriegelt" kann durch Betätigung des Türinnengriffs und des Türaußengriffs die zugeordnete Kraftfahrzeugtür geöffnet werden. Im Funktionszustand "Verriegelt" kann von außen nicht geöffnet werden, wohl aber von innen. Im Funktionszustand "Diebstahlgesichert" kann weder von außen noch von innen geöffnet werden.

Der Funktionszustand "Kindergesichert" hat unterschiedliche Auswirkungen in Abhängigkeit von dem jeweiligen Verriegelungszustand. Im Funktionszustand "Entriegelt-Kindergesichert" kann von außen geöffnet werden, jedoch nicht von innen. Im Funktionszustand "Verriegelt-Kindergesichert" kann in einer einfachen Variante weder von außen geöffnet werden, noch von innen, was dem Funktionszustand "Diebstahlgesichert" entspricht. Bei einer aufwendigeren Variante führt hier eine Betätigung des Türinnengriffs zu einer Überführung in den Funktionszustand "Entriegelt-Kindergesichert", wodurch ein Öffnen von außen möglich wird.

Um alle obigen Funktionszustände abbilden zu können, ist es bekannt, die Schlossmechanik des Kraftfahrzeugschlosses mit zwei Kulissenkupplungen auszustatten, die mittels zweier Antriebsmotoren betätigbar sind (DE 102 58 645 B4). Zwar ist die Zuverlässigkeit solcher Anordnungen hoch. Allerdings ist der konstruktive Aufwand beträchtlich.

Eine durchschlagende Vereinfachung des für die Realisierung der obigen Funktionszustände erforderlichen konstruktiven Aufwands bringt ein jüngst bekannt gewordenes Kraftfahrzeugschloss mit sich, bei dem sich alle obigen Funktionszustände mit einer einzigen Kupplungsanordnung realisieren lassen (DE 20 2007 013 330 U1). Interessant ist hier die Tatsache, dass die Einstellung von Funktionszuständen auf das Auslenken eines länglichen Funktionselements zurückgeht, das insbesondere als federelastisch biegbarer Draht oder Streifen ausgestaltet ist. Das bekannte Kraftfahrzeugschloss ist mit einem Stellantrieb ausgestattet, der für die gezielte Verstellung des Funktionselements sorgt. Der Steuerantrieb weist ein Stellelement mit einer Steuerwelle auf, die nach Art einer Nockenwelle ausgebildet ist, auf der das Funktionselement aufliegt.

Die Anforderungen an den bekannten Stellantrieb bestehen nun darin, die Steuerwelle mit wenig konstruktivem und steuerungstechnischem Aufwand genau und sicher in die jeweils benötigten Stellungen zu überführen. Bei dem bekannten Kraftfahrzeugschloss entsprechen diese Stellungen den Funktionszuständen "Entriegelt", "Verriegelt" und "Diebstahlgesichert". Hierfür weist der bekannte Stellantrieb ein verstellbares Blockierelement auf, das das Stellelement in einer Zwischenstellung, die dem Funktionszustand "Verriegelt" entspricht, blockiert, so dass diese Stellung aus dem Funktionszustand "Entriegelt" heraus im Blockbetrieb angefahren werden kann. Die beiden anderen Stellungen, die den Funktionszuständen "Entriegelt" und "Diebstahlgesichert" entsprechen, werden ebenfalls im Blockbetrieb angefahren. Das Blockierelement wird ferner dazu genutzt, das Stellelement von der dem Funktionszustand "Diebstahlgesichert" entsprechenden Stellung in die dem Funktionszustand "Verriegelt" entsprechende Stellung zurückzustellen.

Der Erfindung liegt das Problem zugrunde, den bekannten Stellantrieb derart auszugestalten und weiterzubilden, dass der Funktionsumfang bei hoher Betriebssicherheit gesteigert wird.

Das obige Problem wird durch einen Stellantrieb gemäß Anspruch 1 gelöst.

Gemäß einer Weiterbildung der Erfindung kann neben der motorischen Verstellbarkeit des Stellelements eine ganz bestimmte Federvorspannung des Stellelements vorteilhaft sein kann.

Im Einzelnen lässt sich das Stellelement im Blockbetrieb in eine erste Funktionsstellung bringen und ist genau in dieser Funktionsstellung gewissermaßen in den Block hinein vorgespannt. Damit lässt sich zunächst einmal die sichere Anlage des Stellelements an dem Blockierelement gewährleisten, da ein Zurückschlagen des Stellelements nach dessen Anschlagen am Blockierelement durch die Vorspannung gehemmt wird.

Die Federvorspannung kann aber auch für die Realisierung der Verstellbewegung des Stellelements von einer Funktionsstellung in die andere Funktionsstellung genutzt werden. Nach einer vorteilhaften Variante gemäß Anspruch 3 lässt sich das Stellelement durch eine Stellbewegung des Blockierelements von einer zweiten Funktionsstellung zurück in die erste Funktionsstellung entgegen der Federvorspannung verstellen. Durch diese Verstellung entge-gen der Federvorspannung muss das die Stellbewegung ausführende Blockierelement lediglich stützend auf das Stellelement wirken.

Bei den weiter bevorzugten Ausgestaltungen gemäß den Ansprüchen 4 bis 9 sind drei bzw. vier Funktionsstellungen des Stellelements vorgesehen, die durch eine geeignete Ansteuerung des Stellelements einerseits und des Blockierelements andererseits angefahren werden können.

Eine Verstellung des Stellelements von der ersten Funktionsstellung in die zweite Funktionsstellung und von der dritten Funktionsstellung in die vierte Funktionsstellung ist vorzugsweise durch die Federvorspannung vorgesehen. Bei der besonders bevorzugten Ausgestaltung gemäß Anspruch 9 reicht eine einfache Verstellung des Blockierelements aus der jeweils blockierenden Stellung heraus, um die federbasierte Verstellung des Verstellelements freizugeben. Eine motorische Verstellung des Stellelements ist mit dieser Betätigung nicht verbunden. Hier zeigt sich, dass mit der Federvorspannung des Stellelements bei geeigneter Auslegung eine grundlegende konstruktive Vereinfachung des in Rede stehenden Stellantriebs möglich ist.

Die Kombination der Nutzung der Bewegung des Blockierelements als Stellbewegung mit der Nutzung der Federvorspannung zur Verstellung des Stellelements von der ersten Funktionsstellung in die zweite Funktionsstellung bzw. von der dritten Funktionsstellung in die vierte Funktionsstellung führt zu einem Stellantrieb, der mit einfachen konstruktiven Mitteln ein genaues und zuverlässiges Anfahren von mehreren Funktionsstellungen, insbesondere von vier Funktionsstellungen, erlaubt. Für jede Änderung der Funktionsstellung muß nur ein elektrischer Motor, nämlich ein dem Stellelement zugeordneter Motor oder ein dem Blockierelement zugeordneter Motor, angesteuert werden, was vor allem steuerungstechnisch vorteilhaft ist.

Nach einer weiteren Lehre gemäß Anspruch 13 wird ein Kraftfahrzeugschloss einer Tür oder dergleichen eines Kraftfahrzeugs beansprucht, das in unterschiedliche Funktionszustände wie "Entriegelt", "Verriegelt" und "Diebstahlgesichert" bringbar ist. Wesentlich nach dieser weiteren Lehre ist die Ausstattung des Kraftfahrzeugschlosses mit einem vorschlagsgemäßen Stellantrieb zur motorischen Einstellung der unterschiedlichen Funktionszustände. Auf alle Ausführungen zu dem vorschlagsgemäßen Stellantrieb darf verwiesen werden.

Bei der bevorzugten Ausgestaltung gemäß Anspruch 14 ist zusätzlich ein Funktionszustand "Entriegelt-Kindergesichert" vorgesehen, in dem sich das Kraftfahrzeugschloss von außen lösen und damit die Tür o. dgl. des Kraftfahrzeugs öffnen lässt, nicht jedoch von innen. Mit den Funktionszuständen "Entriegelt-Kindergesichert" und "Diebstahlsicherung" lässt sich eine einfache Variante einer Kindersicherungsfunktion realisieren. Dabei entspricht der Funktionszustand "Entriegelt-Kindergesichert" dem Funktionszustand "Entriegelt-Kindergesichert" und der Funktionszustand "Verriegelt-Kindergesichert" dem Funktionszustand "Diebstahlgesichert".

Wesentlich ist nun, dass die vier Funktionszustände "Entriegelt", "Verriegelt", "Diebstahlgesichert" und "Entriegelt-Kindergesichert" mittels des Stellantriebs durch dessen vier Funktionsstellungen einstellbar sind.

Bei dem in dem deutschen Gebrauchsmuster DE 20 2007013 330 U1 offenbarten strukturellen Aufbau ist die Tatsache wesentlich, dass eine Schlossmechanik des Kraftfahrzeugschlosses für dessen Überführung in unterschiedliche Funktionszustände mindestens ein in entsprechende Funktionsstellungen verstellbares Funktionselement aufweist, wobei mindestens ein Funktionselement als federelastisch biegbarer Draht oder Streifen ausgestaltet ist und so als Biege-Funktionselement federelastisch in unterschiedliche Funktionsstellungen biegbar ist. Alternativ kann anstelle des federelastisch biegbaren Drahtes oder Streifens auch ein längliches, insbesondere drahtförmiges Element vorgesehen sein, das mittels einer Lagerung entsprechend auslenkbar ist. Wesentlich ist bei dem strukturellen Aufbau des in Bezug genommenen Kraftfahrzeugschlosses ferner die Tatsache, dass der dortige Stellantrieb mit einer Steuerwelle ausgestattet ist, der auslenkend mit dem Funktionselement zusammenwirkt. Die Steuerwelle ist einem Stellelement zugeordnet, das motorisch in unterschiedliche Funktionsstellungen bringbar ist, die wiederum den jeweiligen Funktionszuständen der Schlossmechanik entsprechen.

Im Folgenden wird die Erfindung anhand eines Ausführungsbeispiels näher erläutert. In der Zeichnung zeigt
- Fig. 1: die wesentlichen Elemente des vorschlagsgemäßen Stellantriebs in einer ersten Funktionsstellung in einer Seitenansicht,
- Fig. 2: den Stellantrieb gemäß Fig. 1 in einer zweiten Funktionsstellung,
- Fig. 3: den Stellantrieb gemäß Fig. 1 in einer dritten Funktionsstellung,
- Fig. 4: den Stellantrieb gemäß Fig. 1 in einer vierten Funktionsstellung und
- Fig. 5: in einer ganz schematischen Darstellung die Funktionsweise der Federanordnung des Stellantriebs gemäß Fig. 1 a) in der zweiten Funktionsstellung und b) in der vierten Funktionsstellung.

Es darf vorab darauf hingewiesen werden, dass in der Zeichnung nur die Komponenten des vorschlagsgemäßen Stellantriebs bzw. des vorschlagsgemäßen Kraftfahrzeugschlosses dargestellt sind, die für die Erläuterung der Lehre notwendig sind.

Vorliegend steht der Einsatz des vorschlagsgemäßen Stellantriebs in einem Kraftfahrzeugschloss einer Tür oder dergleichen eines Kraftfahrzeugs im Vordergrund. Dies ist nicht beschränkend zu verstehen.

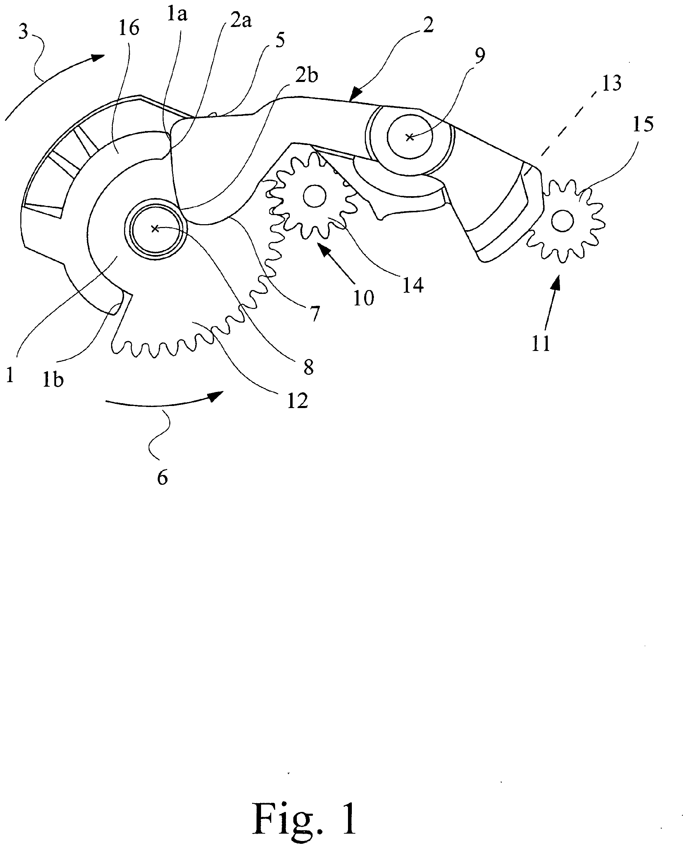

Der in der Zeichnung dargestellte Stellantrieb ist mit einem motorisch verstellbaren Stellelement 1 ausgestattet, das in die in Fig. 1 dargestellte, erste Funktionsstellung bringbar ist. Der Stellantrieb weist ferner ein motorisch verstellbares Blockierelement 2 auf, das in der in Fig. 1 dargestellten, ersten Blockierstellung blockierend in Eingriff mit dem Stellelement 1 bringbar ist derart, dass das Stellelement 1 in einer ersten Bewegungsrichtung 3, in der Zeichnung rechts herum, im Blockbetrieb in die erste Funktionsstellung bringbar ist. Hierfür ist das Stellelement 1 einerseits und das Blockierelement 2 andererseits jeweils mit einer Blockierfläche 1a, 2a ausgestattet, wie noch erläutert wird.

Dem Stellelement 1 kann eine Federanordnung 4 zugeordnet sein, die das in der ersten Funktionsstellung (Fig. 1) befindliche Stellelement 1 in der ersten Bewegungsrichtung 3 vorspannt. Fig. 1 zeigt, dass das Stellelement 1 gewissermaßen in den Block, also gegen das Blockierelement 2, vorgespannt ist. Dies führt zu der weiter oben angesprochenen Positioniergenauigkeit.

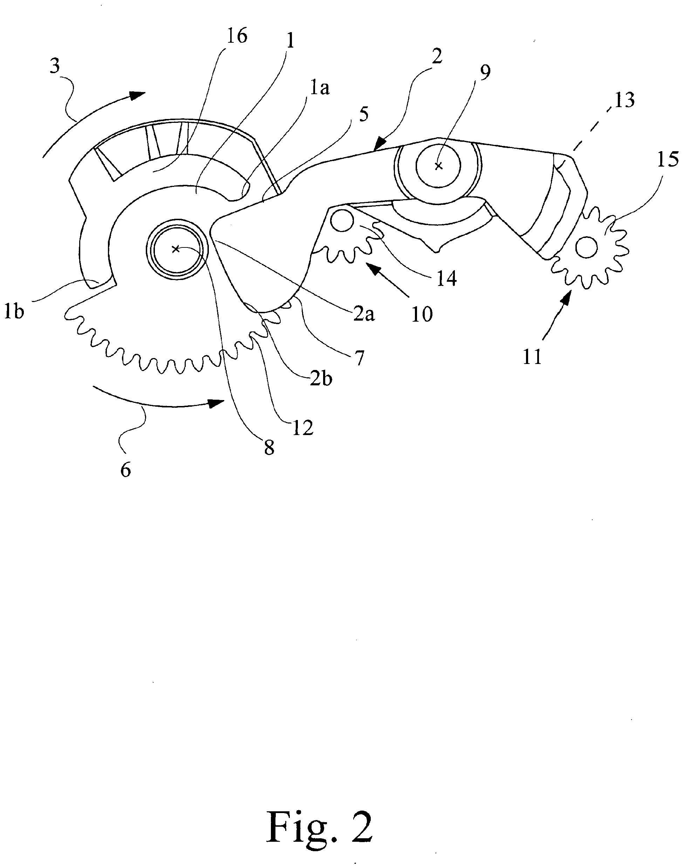

Bei dem dargestellten und insoweit bevorzugten Ausführungsbeispiel ist das Stellelement 1 in eine zweite Funktionsstellung bringbar, die bezogen auf die erste Bewegungsrichtung 3 jenseits der ersten Funktionsstellung liegt. Die zweite Funktionsstellung ist in Fig. 2 gezeigt.

Eine einfache Verstellung des Stellelements 1 von der zweiten Funktionsstellung in die erste Funktionsstellung lässt sich dadurch erreichen, dass durch eine Stellbewegung des Blockierelements 2 von der in Fig. 2 dargestellten, zweiten Blockierstellung vorzugsweise in die in Fig. 1 dargestellte, erste Blockierstellung das Stellelement 1 aus der zweiten Funktionsstellung zurück in die erste Funktionsstellung verstellbar ist. Hierfür ist das Blockierelement 2 mit einer ersten Kontur 5 ausgestattet, an der das Stellelement 1 während der Rückstellung entlang gleitet. Mit der Angabe "zurück" ist gemeint, dass diese Verstellung des Stellelements 1 entgegen der ersten Bewegungsrichtung 3 erfolgt.

Eine Zusammenschau der Fig. 2 und 1 zeigt, dass die obige Rückstellung des Stellelements 1 von der zweiten Funktionsstellung in die erste Funktionsstellung auf eine Verstellung des Blockierelements 2 in der Zeichnung rechts herum zurückgeht. Diese Rückstellung des Stellelements 1 erfolgt gegen dessen Vorspannung, so dass die in Fig. 1 dargestellte, erste Funktionsstellung punktgenau erreicht wird.

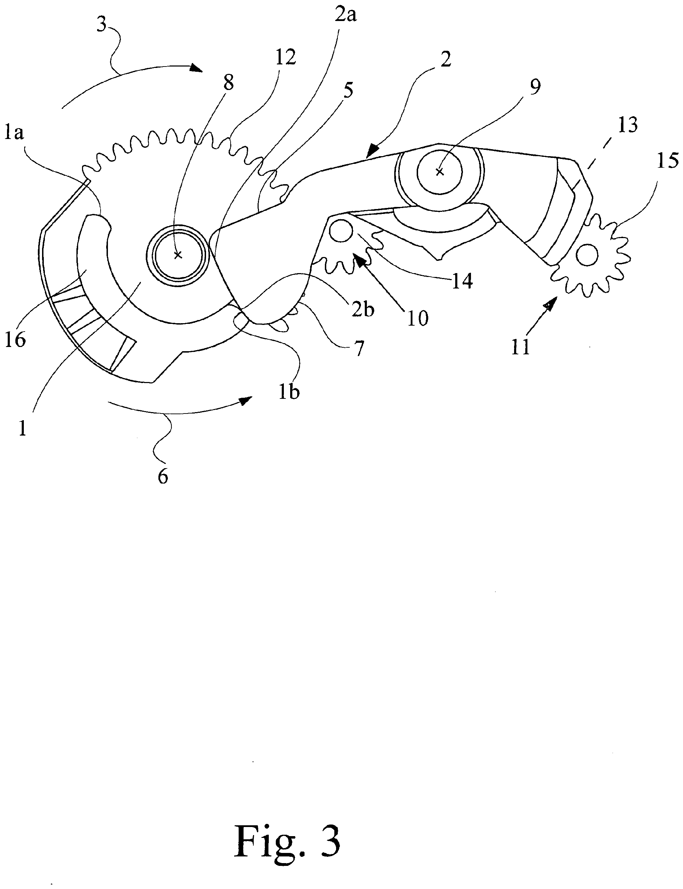

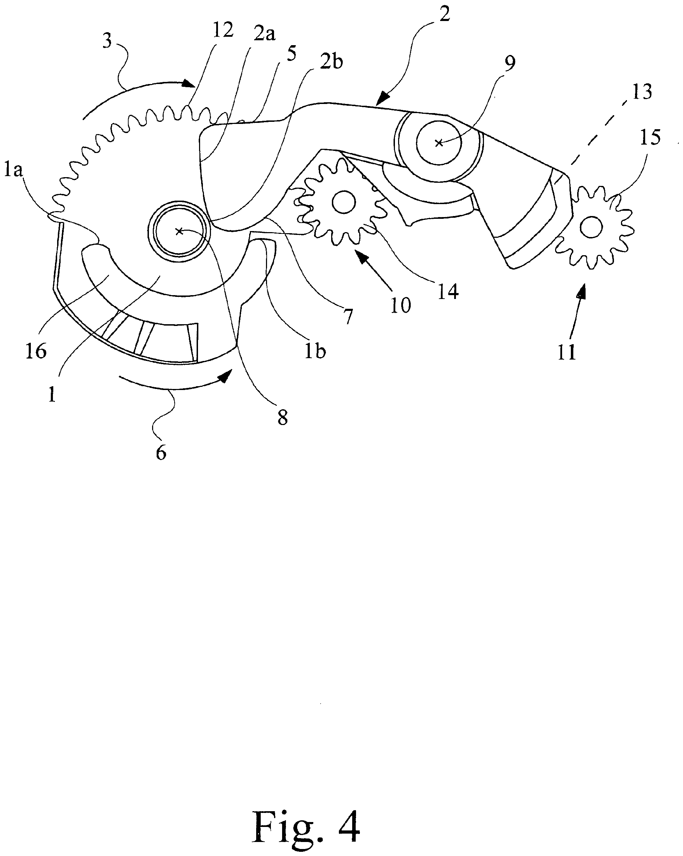

Erfindungsgemäß ist das Stellelement 1 nicht nur in erste und zweite Funktionsstellungen, sondern auch in dritte (Fig. 3) und vierte (Fig. 4) Funktionsstellungen bringbar. Hierfür ist es vorgesehen, dass das Blockierelement 2 in der zweiten, in Fig. 3 dargestellten Blockierstellung blockierend in Eingriff mit dem Stellelement 1 bringbar ist, derart, dass das Stellelement 1 in einer zweiten Bewegungsrichtung 6 im Blockbetrieb in die in Fig. 3 dargestellte, dritte Funktionsstellung bringbar ist. Hierfür sind das Stellelement 1 und das Blockierelement 2 jeweils mit einer Blockierfläche 1b, 2b, ausgestaltet, wie ebenfalls noch erläutert wird. Die zweite Bewegungsrichtung 6 ist hier und vorzugsweise der ersten Bewegungsrichtung 3 entgegengerichtet.

Bei der obigen Realisierung der dritten Funktionsstellung fällt auf, dass für den diesbezüglichen Blockbetrieb dasselbe Blockierelement 2 genutzt wird, das auch für die Realisierung der ersten Funktionsstellung Anwendung findet. Dies führt zu einem besonders einfachen und kompakten konstruktiven Aufbau.

Interessant bei dem dargestellten und insoweit bevorzugten Ausführungsbeispiel ist auch die Tatsache, dass die Federanordnung 4 das in der dritten Funktionsstellung befindliche Stellelement 1 in der zweiten Bewegungsrichtung 6 vorspannt. Die hiermit verbundenen Vorteile entsprechen den mit der oben angesprochenen Vorspannung verbundenen Vorteile.

Die Verstellung des Verstellelements 1 von der vierten Funktionsstellung zurück in die dritte Funktionsstellung lässt sich ebenfalls über eine Stellbewegung des Blockierelements 2 bewerkstelligen. Hierfür ist das Blockierelement 2 mit einer zweiten Kontur 7 ausgestattet, an der das Stellelement 1 entsprechend vorbeigleiten kann. Eine Zusammenschau der Fig. 4 und 3 zeigt, dass diese Rückstellung des Stellelements 1 von der vierten Funktionsstellung in die dritte Funktionsstellung auf eine Verstellung des Blockierelements 2 in der Zeichnung links herum zurückgeht. Mit der Angabe "zurück" ist in Entsprechung zu den obigen Ausführungen gemeint, dass diese Verstellung des Stellelements 1 nun entgegen der zweiten Bewegungsrichtung 6 erfolgt.

Die Rückstellbarkeit des Stellelements 1 durch eine Stellbewegung des Blockierelements 2 ist vorteilhaft, da es einer motorischen Verstellung des Stellelements 1 selbst dabei nicht bedarf.

Hier und vorzugsweise gehen die erste Kontur 5 in die Blockierfläche 2a des Blockierelements 2 und die zweite Kontur 7 in die Blockierfläche 2b des Blockierelements 2 über. Bei der hier gewählten Auslegung ist es dadurch so, dass nach Abschluss der Rückstellbewegung das Stellelement 1 in der ersten Funktionsstellung bzw. der dritten Funktionsstellung und das Blockierelement in der ersten Blockierstellung bzw. der zweiten Blockierstellung "landen". Der jeweils resultierende Zustand entspricht also genau dem jeweils im Blockbetrieb angefahrenen Zustand.

Grundsätzlich kann es vorgesehen sein, dass durch eine Stellbewegung des Blockierelements 2 das Stellelement 1 aus der ersten Funktionsstellung in die zweite Funktionsstellung und/oder von der dritten Funktionsstellung in die vierte Funktionsstellung verstellbar ist. Hier und vorzugsweise ist es allerdings vorgesehen, dass das Stellelement 1 aus der ersten Funktionsstellung (Fig. 1) heraus durch die Federvorspannung in die zweite Funktionsstellung (Fig. 2) bringbar ist. Weiter vorzugsweise, gegebenenfalls alternativ, ist es so, dass das Stellelement 1 auch aus der dritten Funktionsstellung (Fig. 3) heraus durch die Federvorspannung in die vierte Funktionsstellung bringbar ist. Bei geeigneter Auslegung der Federanordnung 4 reicht die Federvorspannung für die obige Verstellung des Stellelements 1 aus.

Bei der oben angesprochenen Auslegung der Federanordnung 4 ist es so, dass das in der ersten Funktionsstellung (Fig. 1) blockierte Stellelement 1 durch eine Verstellung des Blockierelements 2, hier und vorzugsweise in die zweite Blockierstellung, freigebbar ist und dann durch die Federvorspannung die zweite Funktionsstellung (Fig. 2) erreicht. Hier und vorzugsweise ist es ferner so, dass das in der dritten Funktionsstellung (Fig. 3) blockierte Stellelement 1 durch eine Verstellung des Blockierelements 2 hier und vorzugsweise in die erste Blockierstellung freigebbar ist und dann durch die Federvorspannung die vierte Funktionsstellung (Fig. 4) erreicht.

Der zweiten Funktionsstellung und/oder der vierten Funktionsstellung sind vorzugsweise jeweils ein Blockierelement zugeordnet, die in der Zeichnung nicht dargestellt sind. Bei diesen Blockierelementen handelt es sich vorzugsweise um Absätze oder dergleichen im Gehäuse des Kraftfahrzeugschlosses.

Es sind zahlreiche Möglichkeiten für die konstruktive Realisierung des vorschlagsgemäßen Stellantriebs denkbar. Hier und vorzugsweise ist es zunächst einmal vorgesehen, dass das Stellelement 1 um eine Stellelementachse 8 und/oder das Blockierelement 2 um eine Blockierelementachse 9 schwenkbar sind. Denkbar ist beispielsweise auch, dass eines der beiden Elemente linear verstellbar ist. In einer anderen Variante ist nicht nur eine Schwenkbarkeit, sondern auch eine Drehbarkeit des Stellelements 1 und/oder des Blockierelements 2 vorgesehen. In besonders bevorzugter Ausgestaltung ist es allerdings so, dass das Stellelement 1 ausschließlich zwischen der zweiten Funktionsstellung und der vierten Funktionsstellung schwenkbar ist.

Bei dem dargestellten und insoweit bevorzugten Ausführungsbeispiel ist dem Stellelement 1 ein elektrischer Stellmotor 10 und dem Blockierelement 2 ein elektrischer Blockiermotor 11 zugeordnet, wobei hier und vorzugsweise der Antriebsstrang zwischen dem Stellmotor 10 und dem Stellelement 1 nicht selbsthemmend ausgestaltet ist, so dass die obige Rückstellung des Stellelements 1 über eine Stellbewegung des Blockierelements 2 leicht möglich ist. Alternativ oder zusätzlich kann es vorgesehen sein, dass der Antriebsstrang zwischen dem Blockiermotor 11 und dem Blockierelement 2 nicht selbsthemmend ausgestaltet ist. Dies kann insbesondere von Vorteil sein, wenn zusätzlich zu der motorischen Verstellung auch eine manuelle Verstellung durch Benutzerkraft vorgesehen ist.

Es lässt sich der Zeichnung die Tatsache entnehmen, dass das Stellelement 1 und das Blockierelement 2 jeweils ein Zahnsegment 12, 13 aufweisen, das bzw. die mit einem Ritzel 14, 15 des jeweiligen Motors 10, 11 bzw. einem dem jeweiligen Motor 10, 11 zugeordneten Getriebe kämmen. Alternativ kann es beispielsweise vorgesehen sein, dass nur eines der beiden obigen Elemente 1, 2 ein Zahnsegment aufweist.

Durch die Ausgestaltung der beiden obigen Antriebsstränge mit Zahnsegment 12, 13 und Ritzel 14, 15 lässt sich leicht realisieren, dass der Antriebsstrang zwischen dem Stellmotor 10 und dem Stellelement 1 in Abhängigkeit von der Stellung des Stellelements 1 unterbrochen ist. Bei geeigneter Auslegung dieser Unterbrechung des Antriebsstrangs kann auf die nicht selbsthemmende Ausgestaltung des Antriebsstrangs zwischen dem Stellmotor 10 und dem Stellelement 1 verzichtet werden.

Hier und vorzugsweise ist das Stellelement 1 zumindest abschnittsweise scheibenförmig ausgestaltet. Es weist eine seitliche, stegartige Ausformung 16 auf, die sich im Wesentlichen kreisbogenförmig um die Stellelementachse 8 erstreckt und deren endseitige Stirnflächen die Blockierflächen 1a, 1b für das Blockierelement 2 bilden. Die stegartige Ausformung dient auch dem Eingriff mit dem Blockierelement 2 bei der obigen Rückstellung des Stellelements. Eine solche im Wesentlichen scheibenförmige Ausgestaltung des Stellelements 1 hat sich als kompakt und fertigungstechnisch unproblematisch erwiesen.

Das Blockierelement 2 ist hier und vorzugsweise als zweiarmiger Hebel ausgestaltet, der einenends über mindestens eine dem Stellelement 1 zugeordnete Blockierfläche 2a, 2b, hier über die dem Stellelement 1 zugeordneten Blockierflächen 2a, 2b, mit dem Stellelement 1 in blockierenden Eingriff bringbar ist und der anderenends in antriebstechnischen Eingriff mit dem Blockiermotor 11 bzw. einem dem Blockiermotor 11 gegebenenfalls nachgeschalteten Getriebe bringbar ist. Hier und vorzugsweise ist dort das Zahnsegment 13 des Blockierelements 2 angeordnet, das mit dem Ritzel 15 des Blockiermotors 11 kämmt.

Interessant bei dem dargestellten und insoweit bevorzugten Ausführungsbeispiel ist die Tatsache, dass das Stellelement 1 bei in der ersten Blockierstellung befindlichem Blockierelement 2 (Fig. 1) frei vom Blockierelement 2 zwischen der ersten (Fig. 1) und der vierten (Fig. 4) Funktionsstellung verstellbar ist und dass das Stellelement 1 bei in der zweiten Blockierstellung befindlichem Blockierelement 2 (Fig. 2) frei vom Blockierelement 2 zwischen der dritten (Fig. 3) und zweiten (Fig. 2) Funktionsstellung verstellbar ist. Vorteilhaft ist also die Tatsache, dass das Blockierelement 2 die Verstellbarkeit des Stellelements 1 in nur geringem Maße beeinträchtigt.

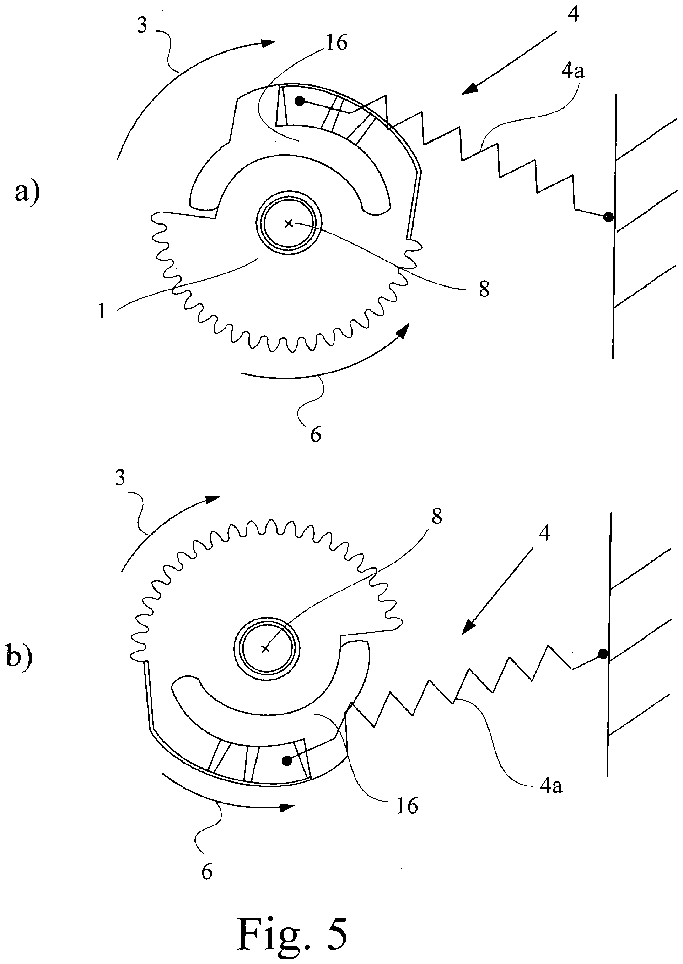

Für die konstruktive Umsetzung der Federanordnung 4 sind zahlreiche Varianten denkbar. Bei dem in Fig. 5 dargestellten und insoweit bevorzugten Ausführungsbeispiel ist die Federanordnung 4 als Kippfederanordnung ausgestaltet. Dabei liegt der Kipppunkt logischerweise zwischen der ersten Funktionsstellung und der dritten Funktionsstellung.

Bei dem in Fig. 5 dargestellten Ausführungsbeispiel weist die Federanordnung 4 ein einziges Federelement 4a, vorzugsweise in Form einer Zugfeder, auf, das weiter vorzugsweise einenends am Gehäuse des Kraftfahrzeugschlosses oder dergleichen und anderenends am Stellelement 1 befestigt ist.

Fig. 5a) zeigt das Stellelement 1 in der zweiten Funktionsstellung. Das Federelement 4a erzeugt ein Drehmoment auf das Stellelement 1 in der ersten Bewegungsrichtung 3, in Fig. 5 rechts herum. Fig. 5b) zeigt das Stellelement 1 in der vierten Funktionsstellung. Hier hat die Federanordnung 4 ihren Kipppunkt überschritten und erzeugt ein Drehmoment auf das Stellelement 1 in der zweiten Bewegungsrichtung 6, in Fig. 5 links herum.

Bei der in Fig. 5 dargestellten Anordnung handelt es sich natürlich nur um eine ganz schematische Darstellung einer nach Art einer Kippfeder aufgebauten Federanordnung 4. Für die konstruktive Ausgestaltung sind zahlreiche vorteilhafte Varianten aus dem Stand der Technik bekannt.

Denkbar ist auch, dass die Federanordnung 4 zwei Federelemente aufweist und dass ein erstes Federelement die Vorspannung in der ersten Funktionsstellung und ein zweites Federelement die Vorspannung in der dritten Funktionsstellung übernimmt. Hier sind Vorkehrungen zu treffen, um selektiv das erste Federelement und das zweite Federelement zu aktivieren.

Es wurde schon darauf hingewiesen, dass der vorschlagsgemäße Stellantrieb einem Kraftfahrzeugschloss einer Tür oder dergleichen des Kraftfahrzeugs zugeordnet sein kann und dass das Kraftfahrzeugschloss mittels des Stellantriebs in unterschiedliche Funktionszustände bringbar ist. Eine bevorzugte Ausgestaltung hierzu wird im Zusammenhang mit der ein Kraftfahrzeugschloss als solches betreffenden Lehre weiter unten erläutert.

Nach der erfindungsgemäßen Lehre wird ein Stellantrieb beansprucht, der in vier Funktionsstellungen bringbar ist, wobei es auf die Realisierung einer Federanordnung 4 nicht ankommt.

Wesentlich ist nach dieser erfindungsgemäßen Lehre, dass das Stellelement in oben beschriebener Weise in die erste und in die dritte Funktionsstellung im Blockbetrieb bringbar ist und dass die Verstellung des Stellelements 1 von der zweiten Funktionsstellung in die erste Funktionsstellung und von der vierten Funktionsstellung in die dritte Funktionsstellung durch entsprechende Stellbewegungen des Blockierelements 2 bewirkbar sind. Zur näheren Erläuterung dieser Lehre darf in vollem Umfange auf die obigen Ausführungen verwiesen werden, wobei es auf die Realisierung einer Federanordnung 4, wie oben angedeutet, nicht ankommt.

Sofern eine Federanordnung 4 nach dieser weiteren Lehre tatsächlich nicht vorgesehen ist, wird die Verstellung des Stellelements 1 von der ersten Funktionsstellung in die zweite Funktionsstellung und von der dritten Funktionsstellung in die vierte Funktionsstellung über den Stellmotor 10 oder über eine entsprechende Stellbewegung des Blockierelements 2 bewerkstelligt.

Nach einer weiteren Lehre, der ebenfalls eigenständige Bedeutung zukommt, wird ein Kraftfahrzeugschloss einer Tür oder dergleichen eines Kraftfahrzeugs beansprucht, das in unterschiedliche Funktionszustände wie "Entriegelt", "Verriegelt" und "Diebstahlgesichert" bringbar ist und das zur motorischen Einstellung der unterschiedlichen Funktionszustände einen vorschlagsgemäßen Stellantrieb aufweist.

In besonders bevorzugter Ausgestaltung ist das Kraftfahrzeugschloss in insgesamt vier Funktionszustände bringbar, mit denen sich neben den üblichen Verriegelungsfunktionen auch die Diebstahlsicherungsfunktion und die Kindersicherungsfunktion abbilden lassen. Entsprechend lässt sich das Kraftfahrzeugschloss in die Funktionszustände "Entriegelt", "Verriegelt" und "Diebstahlgesichert" bringen, deren Bedeutung im Zusammenwirken mit einem Türinnengriff und einem Türaußengriff im allgemeinen Teil der Beschreibung erläutert wurde.

Als vierter Funktionszustand ist der Funktionszustand "Entriegelt-Kindergesichert" vorgesehen, in dem das Kraftfahrzeugschloss nur mittels des Türaußengriffs, nicht jedoch mittels des Türinnengriffs lösbar ist. Der Funktionszustand "Verriegelt-Kindergesichert" entspricht hier dem Funktionszustand "Diebstahlgesichert", so dass mit den vier Funktionszuständen alle obigen Funktionen des Kraftfahrzeugschlosses abgebildet worden sind. Diese vier Funktionszustände werden hier und vorzugsweise über die entsprechenden vier Funktionsstellungen des Stellantriebs eingestellt. Dabei entspricht die erste Funktionsstellung dem Funktionszustand "Verriegelt", die zweite Funktionsstellung dem Funktionszustand "Diebstahlgesichert", die dritte Funktionsstellung dem Funktionszustand "Entriegelt-Kindergesichert" und die vierte Funktionsstellung dem Funktionszustand "Entriegelt".

Sofern es sich bei dem Kraftfahrzeugschloss in seinem Grundaufbau um ein im deutschen Gebrauchsmuster DE 20 2007 013 330 U1 gezeigten Kraftfahrzeugschloss handelt, lässt sich der gesamte Funktionsumfang des Kraftfahrzeugschlosses mit einer einzigen Kupplungsanordnung und einem einzigen Stellelement realisieren. Das führt zu einer hohen Kompaktheit und zu geringen Kosten.

## Patentansprüche

1. Stellantrieb einer Komponente eines Kraftfahrzeugs mit einem motorisch verstellbaren Stellelement (1), wobei das Stellelement (1) in eine erste Funktionsstellung bringbar ist, wobei ein motorisch verstellbares Blockierelement (2) vorgesehen ist, das in einer ersten Blockierstellung blockierend in Eingriff mit dem Stellelement (1) bringbar ist derart, dass das Stellelement (1) in einer ersten Bewegungsrichtung (3) im Blockbetrieb in die erste Funktionsstellung bringbar ist, wobei durch eine Stellbewegung des Blockierelements (2) das Stellelement (1) aus einer bezogen auf die erste Bewegungsrichtung (3) jenseits der ersten Funktionsstellung liegenden, zweiten Funktionsstellung zurück in die erste Funktionsstellung verstellbar ist,
wobei das Stellelement (1) in eine dritte Funktionsstellung bringbar ist, dass das Blockierelement (2) in einer zweiten Blockierstellung blockierend in Eingriff mit dem Stellelement (1) bringbar ist derart, dass das Stellelement (1) in einer zweiten Bewegungsrichtung (6) im Blockbetrieb in die dritte Funktionsstellung bringbar ist, dass durch eine Stellbewegung des Blockierelements (2) das Stellelement (1) aus einer bezogen auf die zweite Bewegungsrichtung jenseits der dritten Funktionsstellung liegenden, vierten Funktionsstellung in die dritte Funktionsstellung zurückstellbar ist.

2. Stellantrieb nach Anspruch 1, **dadurch gekennzeichnet, dass** dem Stellelement (1) eine Federanordnung (4) zugeordnet ist, die das in der ersten Funktionsstellung befindliche Stellelement (1) in der ersten Bewegungsrichtung (3) vorspannt.

3. Stellantrieb nach Anspruch 1 oder 2, **dadurch gekennzeichnet, dass** durch eine Stellbewegung des Blockierelements (2) in die erste Blockierstellung das Stellelement (1) aus einer bezogen auf die erste Bewegungsrichtung (3) jenseits der ersten Funktionsstellung liegenden, zweiten Funktionsstellung zurück in die erste Funktionsstellung verstellbar ist.

4. Stellantrieb nach einem der vorhergehenden Ansprüche, **dadurch gekennzeichnet, dass** die zweite Bewegungsrichtung (6) der ersten Bewegungsrichtung (3) entgegengerichtet ist.

5. Stellantrieb nach Anspruch 2, **dadurch gekennzeichnet, dass** die Federanordnung (4) das in der dritten Funktionsstellung befindliche Stellelement (1) in der zweiten Bewegungsrichtung vorspannt.

6. Stellantrieb nach einem der vorhergehenden Ansprüche, **dadurch gekennzeichnet, dass** durch eine Stellbewegung des Blockierelements (2) in die zweite Blockierstellung das Stellelement (1) aus einer bezogen auf die zweite Bewegungsrichtung jenseits der dritten Funktionsstellung liegenden, vierten Funktionsstellung zurück in die dritte Funktionsstellung verstellbar ist.

7. Stellantrieb nach einem der vorhergehenden Ansprüche, **dadurch gekennzeichnet, dass** durch eine Stellbewegung des Blockierelements (2) das Stellelement (1) aus der ersten Funktionsstellung in die zweite Funktionsstellung und/oder von der dritten Funktionsstellung in die vierte Funktionsstellung verstellbar ist.

8. Stellantrieb nach Anspruch 2, **dadurch gekennzeichnet, dass** das Stellelement (1) aus der ersten Funktionsstellung heraus durch die Federvorspannung in die zweite Funktionsstellung bringbar ist, und/oder, dass das Stellelement (1) aus der dritten Funktionsstellung heraus durch die Federvorspannung in die vierte Funktionsstellung bringbar ist.

9. Stellantrieb nach Anspruch 8, **dadurch gekennzeichnet, dass** das in der ersten Funktionsstellung blockierte Stellelement (1) durch eine Verstellung des Blockierelements (2) insbesondere in die zweite Blockierstellung freigebbar ist und dann durch die Federvorspannung die zweite Funktionsstellung erreicht, und/oder, dass das in der dritten Funktionsstellung blockierte Stellelement (1) durch eine Verstellung des Blockierelements (2) insbesondere in die erste Blockierstellung freigebbar ist und dann durch die Federvorspannung die vierte Funktionsstellung erreicht.

10. Stellantrieb nach einem der vorhergehenden Ansprüche, **dadurch gekennzeichnet, dass** dem Stellelement (1) ein elektrischer Stellmotor (10) und dem Blockierelement (2) ein elektrischer Blockiermotor (11) zugeordnet ist, vorzugsweise, dass der Antriebsstrang zwischen dem Stellmotor (10) und dem Stellelement (1) und/oder der Antriebsstrang zwischen dem Blockiermotor (11) und dem Blockierelement (2) nicht selbsthemmend ausgestaltet ist bzw. sind.

11. Stellantrieb nach einem der vorhergehenden Ansprüche, **dadurch gekennzeichnet, dass** das Stellelement (1) bei in der ersten Blockierstellung befindlichem Blockierelement (2) frei vom Blockierelement (2) zwischen der ersten und der vierten Funktionsstellung verstellbar ist und dass das Stellelement (1) bei in der zweiten Blockierstellung befindlichem Blockierelement (2) frei vom Blockierelement (2) zwischen der dritten und der zweiten Funktionsstellung verstellbar ist.

12. Stellantrieb nach Anspruch 2, **dadurch gekennzeichnet, dass** die Federanordnung (4) als Kippfederanordnung ausgestaltet ist, vorzugsweise, dass der Kipppunkt zwischen der ersten Funktionsstellung und der dritten Funktionsstellung liegt.

13. Kraftfahrzeugschloß einer Tür o. dgl. eines Kraftfahrzeugs, das in unterschiedliche Funktionszustände wie "Entriegelt", "Verriegelt" und "Diebstahlgesichert" bringbar ist,
**dadurch gekennzeichnet,**
**dass** das Kraftfahrzeugschloß zur motorischen Einstellung der unterschiedlichen Funktionszustände einen Stellantrieb nach einem der vorhergehenden Ansprüche aufweist.

14. Kraftfahrzeugschloß nach Anspruch 13, **dadurch gekennzeichnet, dass** dem Kraftfahrzeugschloß ein Türinnengriff und ein Türaussengriff zugeordnet ist, über die das Kraftfahrzeugschloß lösbar ist, dass das Kraftfahrzeugschloss mittels des Stellantriebs in einen ersten Funktionszustand "Entriegelt", in einen zweiten Funktionszustand "Verriegelt" und in einen dritten Funktionszustand "Diebstahlgesichert" bringbar ist, dass das Kraftfahrzeugschloß im Funktionszustand "Entriegelt" mittels des Türinnengriffs und des Türaussengriffs lösbar ist, im Funktionszustand "Verriegelt" nur mittels des Türinnengriffs lösbar ist und im Funktionszustand "Diebstahlgesichert" weder mittels des Türinnengriffs noch mittels des Türaußengriffs lösbar ist, dass das Kraftfahrzeugschloß in einen vierten Funktionszustand "Entriegelt-Kindergesichert" bringbar ist, in dem das Kraftfahrzeugschloß nur mittels des Türaußengriffs lösbar ist und dass die vier Funktionszustände des Kraftfahrzeugschlosses über die entsprechenden vier Funktionsstellungen des Stellantriebs einstellbar sind.

## Claims

1. Actuator for a component of a motor vehicle, with an adjustment element (1) which is adjustable in a motorized manner, wherein the adjustment element (1) can be brought into a first functional position, wherein a blocking element (2) which is adjustable in a motorized manner is provided and can be brought into engagement in a blocking manner with the adjustment element (1) in a first blocking position in such a manner that the adjustment element (1) can be brought in a first direction of movement (3) in the blocking mode into the first functional position, wherein, by means of an adjustment movement of the blocking element (2), the adjustment element (1) is adjustable from a second functional position, which lies on the far side of the first functional position with respect to the first direction of movement (3), back into the first functional position, wherein the adjustment element (1) can be brought into a third functional position, in that the blocking element (2) can be brought in a blocking manner into engagement with the adjustment element (1) in a second blocking position in such a manner that the adjustment element (1) can be brought in a second direction of movement (6) in the blocking mode into the third functional position, in that, by means of an adjustment movement of the blocking element (2), the adjustment element (1) can be reset from a fourth functional position, which lies on the far side of the third functional position with respect to the second direction of movement, into the third functional position,

2. Actuator according to Claim 1, **characterized in that** the adjustment element (1) is assigned a spring arrangement (4) which pretensions the adjustment element (1), which is in the first functional position, in the first direction of movement (3).

3. Actuator according to Claim 1 or 2, **characterized in that**, by means of an adjustment movement of the blocking element (2) into the first blocking position, the adjustment element (1) can be adjusted from a second functional position, which lies on the far side of the first functional position with respect to the first direction of movement (3), back into the first functional position.

4. Actuator according to one of the preceding claims, **characterized in that** the second direction of movement (6) is directed counter to the first direction of movement (3).

5. Actuator according to Claim 2, **characterized in that** the spring arrangement (4) pretensions the adjustment element (1), which is in the third functional position, in the second direction of movement.

6. Actuator according to one of the preceding claims, **characterised in that**, by means of an adjustment movement of the blocking element (2) into the second blocking position, the adjustment element (1) can be adjusted from a fourth functional position, which lies on the far side of the third functional position with respect to the second direction of movement, back into the third functional position.

7. Actuator according to one of the preceding claims, **characterized in that**, by means of an adjustment movement of the blocking element (2), the adjustment element (1) can be adjusted from the first functional position into the second functional position and/or from the third functional position into the fourth functional position.

8. Actuator according to Claim 2, **characterized in that** the adjustment element (1) can be brought out of the first functional position into the second functional position by means of the spring pretensioning, and/or **in that** the adjustment element (1) can be brought out of the third functional position into the fourth functional position by means of the spring pretensioning.

9. Actuator according to Claim 8, **characterized in that** the adjustment element (1), which is blocked in the first functional position, can be released by an adjustment of the blocking element (2) in particular into the second blocking position and then reaches the second functional position by means of the spring pretensioning, and/or **in that** the adjustment element (1), which is blocked in the third functional position, can be released by adjustment of the blocking element (2) in particular into the first blocking position and then reaches the fourth functional position by means of the spring pretensioning.

10. Actuator according to any of the preceding claims, **characterised in that** the adjustment element (1) is assigned an electric adjustment motor (10) and the blocking element (2) is assigned an electric blocking motor (11), preferably **in that** the drive train between the adjustment motor (10) and the adjustment element (1) and/or the drive train between the blocking motor (11) and the blocking element (2) is or are configured not to be self-locking.

11. Actuator according to one of the preceding claims, **characterized in that**, when the blocking element (2) is located in the first blocking position, the adjustment element (1) is adjustable between the first and the fourth functional position freely from the blocking element (2), and **in that**, when the blocking element (2) is located in the second blocking position, the adjustment element (1) is adjustable between the third and the second functional position freely from the blocking element (2).

12. Actuator according to Claim 2, **characterized in that** the spring arrangement (4) is configured as a tilting spring arrangement, preferably **in that** the tilting point lies between the first functional position and the third functional position.

13. Motor vehicle lock of a door or the like of a motor vehicle, which can be brought into different functional states, such as "unlocked", "locked" and "anti-theft locked", **characterized in that** the motor vehicle lock has an actuator according to one of the preceding claims for the motorized setting of the different functional states.

14. Motor vehicle lock according to Claim 13, **characterized in that** the motor vehicle lock is assigned a door inside handle and a door outside handle, via which handles the motor vehicle lock can be released, **in that** the motor vehicle lock can be brought by means of the actuator into a first functional state "unlocked", into a second functional state "locked" and into a third functional state "anti-theft locked", **in that** the motor vehicle lock in the functional state "unlocked" can be released by means of the door inside handle and the door outside handle, in the functional state "locked" can be released only by means of the door inside handle, and in the functional state "anti-theft locked" cannot be released either by means of the door inside handle or by means of the door outside handle, **in that** the motor vehicle lock can be brought into a fourth functional state "child-safety unlocked" in which the motor vehicle lock can be released only by means of the door outside handle, and **in that** the four functional states of the motor vehicle lock can be set via the corresponding four functional positions of the actuator.

## Revendications

1. Entraînement de réglage d'un composant de véhicule automobile, comprenant un actionneur (1) pouvant être déplacé par un moteur, l'actionneur (1) pouvant être amené dans une première position fonctionnelle, un élément de blocage (2) pouvant être déplacé par un moteur étant prévu, lequel, dans une première position de blocage, peut être amené de manière bloquante en prise avec l'actionneur (1) de telle sorte que l'actionneur (1) puisse être amené dans la première position fonctionnelle dans une première direction de déplacement (3) en mode de blocage, l'actionneur (1) pouvant être ramené à nouveau dans la première position fonctionnelle par un déplacement de réglage de l'élément de blocage (2), à partir d'une deuxième position fonctionnelle située au-delà de la première position fonctionnelle par rapport à la première direction de déplacement (3),
l'actionneur (1) pouvant être amené dans une troisième position fonctionnelle, en ce que l'élément de blocage (2) peut être amené dans une deuxième position de blocage en prise avec l'actionneur (1) en mode de blocage, de telle sorte que l'actionneur (1) puisse être amené dans la troisième position fonctionnelle dans une deuxième direction de déplacement (6) en mode de blocage, en ce que l'actionneur (1), par un déplacement de réglage de l'élément de blocage (2), peut être ramené dans la troisième position fonctionnelle à partir d'une quatrième position fonctionnelle située au-delà de la troisième position fonctionnelle par rapport à la deuxième direction de déplacement.

2. Entraînement de réglage selon la revendication 1, **caractérisé en ce qu'**un agencement de ressort (4) est associé à l'actionneur (1), lequel précontraint dans la première direction de déplacement (3) l'actionneur (1) se trouvant dans la première position fonctionnelle.

3. Entraînement de réglage selon la revendication 1 ou 2, **caractérisé en ce que** l'actionneur (1) peut être ramené dans 1a première position fonctionnelle à partir d'une deuxième position fonctionnelle située au-delà de la première position fonctionnelle par rapport à la première direction de déplacement (3) par un déplacement de réglage de l'élément de blocage (2) dans la première position de blocage.

4. Entraînement de réglage selon l'une quelconque des revendications précédentes, **caractérisé en ce que** la deuxième direction de déplacement (6) est opposée à la première direction de déplacement (3) .

5. Entraînement de réglage selon la revendication 2, **caractérisé en ce que** l'agencement de ressort (4) précontraint dans la deuxième direction de déplacement l'actionneur (1) se trouvant dans la troisième position fonctionnelle.

6. Entraînement de réglage selon l'une quelconque des revendications précédentes, **caractérisé en ce que** l'actionneur (1) peut être ramené dans la troisième position fonctionnelle à partir d'une quatrième position fonctionnelle située au-delà de la troisième position fonctionnelle par rapport à la deuxième direction de déplacement par un déplacement de réglage de l'élément de blocage (2) dans la deuxième position de blocage.

7. Entraînement de réglage selon l'une quelconque des revendications précédentes, **caractérisé en ce que** l'actionneur (1) peut être déplacé de la première position fonctionnelle dans la deuxième position fonctionnelle et/ou de la troisième position fonctionnelle dans la quatrième position fonctionnelle par un déplacement de réglage de l'élément de blocage (2).

8. Entraînement de réglage selon la revendication 2, **caractérisé en ce que** l'actionneur (1) peut être amené de la première position fonctionnelle par la précontrainte du ressort dans la deuxième position fonctionnelle et/ou **en ce que** l'actionneur (1) peut être amené de la troisième position fonctionnelle par la précontrainte du ressort dans la quatrième position fonctionnelle.

9. Entraînement de réglage selon la revendication 8, **caractérisé en ce que** l'actionneur (1) bloqué dans la première position fonctionnelle peut être libéré par un déplacement de l'élément de blocage (2) notamment dans la deuxième position de blocage et atteint ensuite, sous l'effet de la précontrainte du ressort, la deuxième position fonctionnelle et/ou **en ce que** l'actionneur (1) bloqué dans la troisième position fonctionnelle peut être libéré par un déplacement de l'élément de blocage (2) notamment dans la première position de blocage et atteint ensuite, sous l'effet de la précontrainte du ressort, la quatrième position fonctionnelle.

10. Entraînement de réglage selon l'une quelconque des revendications précédentes, **caractérisé en ce qu'**un moteur de réglage électrique (10) est associé à l'actionneur (1) et un moteur de blocage électrique (11) est associé à l'élément de blocage (2), de préférence **en ce que** la chaîne cinématique entre le moteur de réglage (10) et l'actionneur (1) et/ou la chaîne cinématique entre le moteur de blocage (11) l'élément de blocage (2) ne sont pas réalisées sous forme autobloquante.

11. Entraînement de réglage selon l'une quelconque des revendications précédentes, **caractérisé en ce que** l'actionneur (1), lorsque l'élément de blocage (2) se trouve dans la première position de blocage, peut être déplacé de manière libérée de l'élément de blocage (2) entre la première et la quatrième position fonctionnelle et **en ce que** l'actionneur (1), lorsque l'élément de blocage (2) se trouve dans la deuxième position de blocage, peut être déplacé de manière libérée de l'élément de blocage (2) entre la troisième et la deuxième position fonctionnelle.

12. Entraînement de réglage selon la revendication 2, **caractérisé en ce que** l'agencement de ressort (4) est configuré en tant qu'agencement de ressort basculant, de préférence **en ce que** le point de basculement est situé entre la première position fonctionnelle et la troisième position fonctionnelle.

13. Serrure de véhicule automobile, pour une porte ou similaire d'un véhicule automobile, qui peut être amenée dans différents états fonctionnels, tels que "déverrouillé", "verrouillé" et "antivol", **caractérisée en ce que**
la serrure de véhicule automobile présente, pour le réglage motorisé des différents états fonctionnels, un entraînement de réglage selon l'une quelconque des revendications précédentes.

14. Serrure de véhicule automobile selon la revendication 13, **caractérisée en ce qu'**une poignée de porte intérieure et une poignée de porte extérieure sont associées à la serrure de véhicule automobile, la serrure de véhicule automobile pouvant être déverrouillée par le biais de ces poignées, **en ce que** la serrure de véhicule automobile peut être amenée au moyen de l'entraînement de réglage dans un premier état fonctionnel "déverrouillé", dans un deuxième état fonctionnel "verrouillé" et dans un troisième état fonctionnel "antivol", **en ce que** la serrure de véhicule automobile, dans l'état fonctionnel "déverrouillé", peut être déverrouillée au moyen de la poignée de porte intérieure et de la poignée de porte extérieure, dans l'état fonctionnel "verrouillé" peut seulement être déverrouillée au moyen de la poignée de porte intérieure et dans l'état fonctionnel "antivol" ne peut être déverrouillée ni au moyen de la poignée de porte intérieure ni au moyen de la poignée de porte extérieure, **en ce que** la serrure de véhicule automobile peut être amenée dans un quatrième état fonctionnel "déverrouillé-sécurité enfant" dans lequel la serrure de véhicule automobile ne peut être déverrouillée qu'au moyen de la poignée extérieure de porte et **en ce que** les quatre états fonctionnels de la serrure de véhicule automobile peuvent être ajustés par le biais des quatre positions fonctionnelles correspondantes de l'entraînement de réglage.
